# EUROPEAN PATENT SPECIFICATION

(11) **EP 1 526 703 B1**
(45) Date of publication and mention of the grant of the patent: **16.07.2008**
(21) Application number: 04292473.8
(22) Date of filing: 18.10.2004
(51) Int. Cl.: H04L 29/12, H04L 12/28

(54) **System and method for sharing an IP address**
Vorrichtung und Verfahren zur gemeinsamen Benutzung einer IP Adresse
Système et procédé pour partager une adresse IP

(30) Priority: 24.10.2003 US 513556 P
(43) Date of publication of application: 27.04.2005
(73) Proprietor: Media5 Corporation, Sherbrooke QC J1L 2C8 (CA)
(72) Inventor: Boyer, Jean-Denis, (Québec) J0B 2VO (CA); Beaudoin, Eric, Sherbrooke (Québec) J1L 2C1 (CA)
(74) Representative: Peaucelle, Chantal

(56) References cited:
- EP-A- 1 017 206
- EP-A- 1 085 728
- EP-A- 1 187 426
- US-A1- 2002 046 404

## Description

### FIELD OF THE INVENTION

The present invention relates to sharing of an IP address. More specifically, the present invention is concerned with a routing system and method for sharing of an IP address.

### BACKGROUND OF THE INVENTION

Internet users wanting to use network applications hosted by dedicated devices for example generally need obtaining from their Internet Service Provider (ISP) a different IP (Internet protocol) address, such as an IPv4 (Internet .Protocol Version 4) address, which uniquely identifies each devices on the Internet, for each device used. Due to a finite number of available IPv4 addresses in the Internet, this is not always possible.

A well known solution to such a type of problems includes using a router that acts as a Network Address Translator (NAT) bet8.3ween a local network, such as a Local Area Network (LAN), and a larger network, such as a Wide Area Network (WAN), as described in Srisuresh, P., « IP Network Address Translator (NAT) Terminology and Considerations », RFC 2663, August 1999, for example. The NAT uses a public IPv4 address to allow a set of devices located on nodes within the LAN to communicate with nodes of the WAN. On the LAN side, private IPv4 addresses are allocated to each device, usually by Dynamic Host Configuration Protocol (DHCP). When a packet of data is sent to the WAN, the NAT translates the private source address into a public address and saves a corresponding data flow as a new connection. When a packet of data is received from the WAN, the NAT identifies it to a corresponding data flow, and translates the public address destination into the private address of a device it is destined for in the LAN. The NAT modifies the IPv4 addressing, and takes special care of protocols such as UDP (User Data Protocol) and TCP (Transmission Control Protocol) to avoid port conflicts; it may further have to translate port numbers.

Interestingly, NAT based systems and methods are efficient in cases when there are a number of nodes in the local LAN. Moreover, solutions based on using a NAT allow an increased security by hiding nodes on the LAN, wherein the nodes behind the NAT using a private IPv4 address are unreachable from a node on the WAN, and packets of data pass through the NAT and are forwarded to the LAN only if a communication, initiated from the LAN, exists.

However NAT based systems and methods may be limited by the limited number of private IP addresses available as mentioned hereinabove, by an available range of port numbers and by the proper performance of the router acting as a NAT.

Besides, there are known drawbacks of NAT based systems and methods. First, the nodes on the LAN ignore the real public IPv4 address. This is a problem when registering to a public server (the Session Initiation Protocol (SIP) is an example), whereby the IPv4 address is copied into the protocol data and thus the NAT is unable to translate it.

Second, the nodes on the LAN cannot easily offer public services, in particular in the cases of server applications that listen to specific ports, since the NAT needs to know these specific server ports to allow connections to be initiated from the WAN.

Finally, NAT's may further require specific translation agents such as Application Level Gateways (ALG) for certain protocols, in the case of special translation performed by the NAT for specific application level protocols. This allows devices connected to the LAN to ignore the presence of the NAT. But as new protocols are created, new ALGs may have to be added without which applications do not operate without the NAT being first updated.

Consequently, when only a reduced number of devices in the local network need to be connected to the large network using only one IPv4 address, the NAT may not be the best solution, due to its complexity and aforementioned disadvantages.

Tanaka et al. in EP 1 085 728 disclose an IP address communication method wherein a public IP address is shared through conversion of the public IP address into a private IP address and vice-versa.

Ryu et al in EP 187 426 describe a method for allocating and using unique IP address for a limited period of time in devices connected to a LAN, using a router 102, which is assigned a public address different from the private addresses provided to the devices, the router 102 implementing an address conversion.

Allan in EP 1017206 teaches an IP address communication method using a proprietary protocol.

Therefore, there is a need in the art for a routing system and method for sharing a public Internet Protocol address with a single node on a local network.

### SUMMARY OF THE INVENTION

There is provided a method for sharing a public Internet Protocol, IP, address between an application, hosted by at least one routing device, and a device of a local area network, the at least one routing device comprising a first IP interface to a wide area network and a second IP interface to the local area network; the first IP interface being assigned a public IP address, characterized in that the method comprises assigning the local network device the public IP address of the first interface of the at least one routing device; whereby the at least one routing device forwards each IP packet received from the wide area network, destined for the public IP address, by performing transparent IP routing, to the local network device on the local area network, except if it belongs to one of: i) an existing connection used by the hosted application , and ii) a sever port of the hosted application currently opened; and reversely, the at least one routing device forwards each IP packet received from the local area network, by performing transparent IP routing, to the wide area network, except for IP packets sent explicitly to a private address of the at least one routing device.

There is further provided a routing apparatus for sharing a public internet Protocol, IP, address between an application hosted by at least one routing device and a device of a local area network, comprising a first IP interface to the wide area network and a second IP interface to the local area network, the first IP interface being assigned a public IP address; characterized in that
- said public IP address is assigned to the at least one local area network device, said routing apparatus having means for forwarding IP packets between the wide area network and the local area network by performing transparent IP routing; and
- the routing apparatus has means for sending each IP packet received from the wide area network and destined for the public IP address, by performing transparent IP routing, to the at least one area network device, except if an IP packet belongs to one of :i) an existing connection used by an application hosted by the routing apparatus and ii) a sever port of the hosted application currently opened; and has means for sending, by performing transparent IP routing, each IP packet received from the local area network to the wide area network, except for IP packets sent explicitly to a private address of the routing apparatus.

Other objects, advantages and features of the present invention will become more apparent upon reading of the following non-restrictive description of embodiments thereof, given by way of example only with reference to the accompanying drawings.

### BRIEF DESCRIPTION OF THE DRAWINGS

In the appended drawings:

Figure 1 is a general schematic view of a system according to the present invention;

Figure 2 illustrates a first application of a system according to the present invention;

Figure 3 illustrates a second application of a system according to the present invention; and

Figure 4 illustrates a third application of a system according to the present invention.

### DESCRIPTION OF EMBODIMENTS OF THE INVENTION

The present invention provides a routing system and method allowing sharing a public IP address, such as a public IPv4 (Internet Protocol Version 4) address for example, between an application hosted on the routing device and a node of a local network.

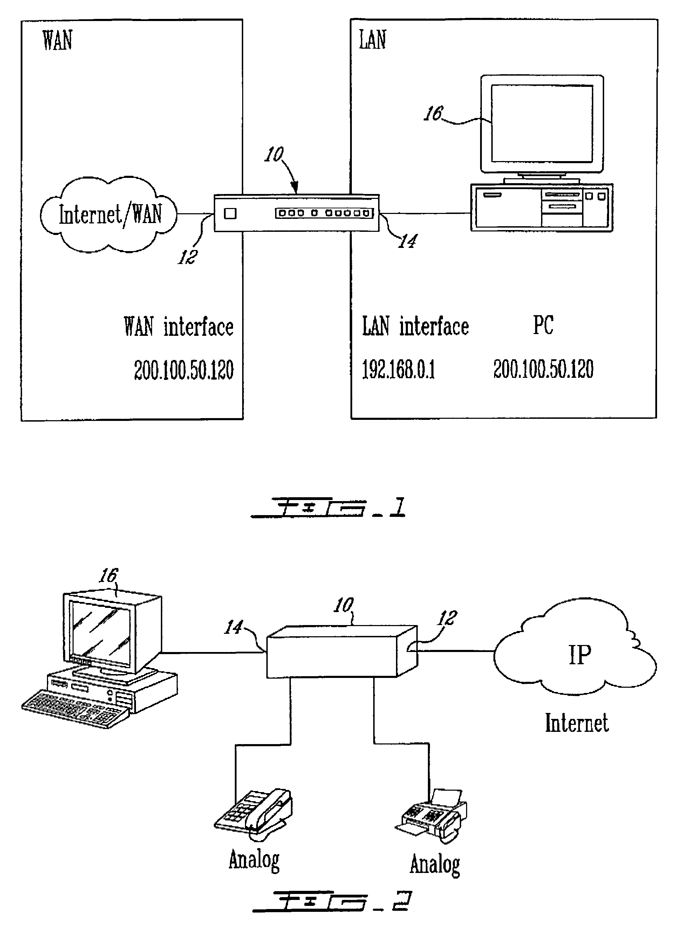

As illustrated in Figure 1 of the appended drawings, the routing device 10 generally comprises an Internet Protocol interface 12 to connect to a wide area network such as a WAN, and an Internet Protocol interface 14 to connect to a device 16 of a local network such as a LAN.

The IP interface 12 to the wide area network is assigned a public IP address, such as an IPv4 address, by an ISP, either by a DHCP negotiation (see for example Droms, R., « Dynamic Host Configuration Protocol », RFC 2131, March 1997), by establishing a point-to-point link (PPP), or by any other mechanism depending on a type of link between the routing device 10 and the large network 12, as is well known in the art.

The IP interface to the local network 14 is assigned a private IP address, such as a private IPv4 address for example, as known in the art (see for example Rekhter, Y., « Address Allocation for Local Internets », RFC 1918, February 1996). This private IP address of the IP interface to the local network 14 is statically configured and allows the device 16 on the local network 14 to communicate with the routing device 10, which would otherwise be impossible since both share a same public IPv4 address, as will be described further hereinbelow.

The device 16 on the local network 14 is assigned the same public IPv4 address as the routing device 10, by using DHCP, and is related to a subnet mask the same as the one assigned by the ISP. Alternatively, if this is not available, such as in the case of a PPP connection for instance, predefined subnet classes are used. The device 16 may be a router for example.

The routing device 10 performs transparent routing as described in the art (see for example Smoot, C-M., « Using ARP to implement Transparent Subnet Gateways », RFC 1027, October 1987), by forwarding to the wide area network any packet of data sent to any IP address that is included in the large subnet. Thus, a default router assigned to the device 16 on the local network 14 may be any IP address included in the subnet, excluding the one IP address bound thereto of course.

Each packet of data received from the wide area network, destined for the IP public address, is forwarded directly to the network device 16 on the local network 14, except if it belongs to an existing connection used by the hosted application, or to a server port currently opened. Reversely, each IP packet received from the local network 14 is forwarded to the wide area network side, except for packets sent explicitly to a private address of the routing device 10.

The routing device 10 may initiate a communication with the device 16 on the local network 14, by using its private IP address as a source address.

People in the art will appreciate that since the device 16 on the local network 14 is bound to the public IP address of the routing device 10, the device 16 knows the real public address that is to be used by other nodes of the wide area network to reach it, without recurring to an ALG for example.

The present invention therefore simplifies offer of public services, since the device 16 on the local network may easily open server ports, without the need to inform the routing device 10, providing the device 16 does not use the same server ports as the application hosted on the routing device 10, as already mentioned.

As a result, the routing device of the present invention is generally less complex that existing systems, since there is no need to register connections that the device does not own, allowing faster routing decisions with less memory resources.

It is noted that in cases involving more than one device 16, device. 16 connected on interface 14 can be a routing device that in turns connects to other devices 16 with additional interfaces.

To compensate for an absence of security hiding behind local IPv4 addressing, a firewall may be used, which may either reside on the device 16 on the LAN 12 or be integrated to the routing device 10 logic.

Figure 2 illustrates an exemplary application of the device of the present invention for offering VoIP (voice over internet protocol) or telephony services over the Internet in a residential installation, wherein a routing device 10 with analog phone ports and an embedded telephony application is connected directly to the WAN 12 for allowing a personal computer 16 to be transparently connected to the Internet.

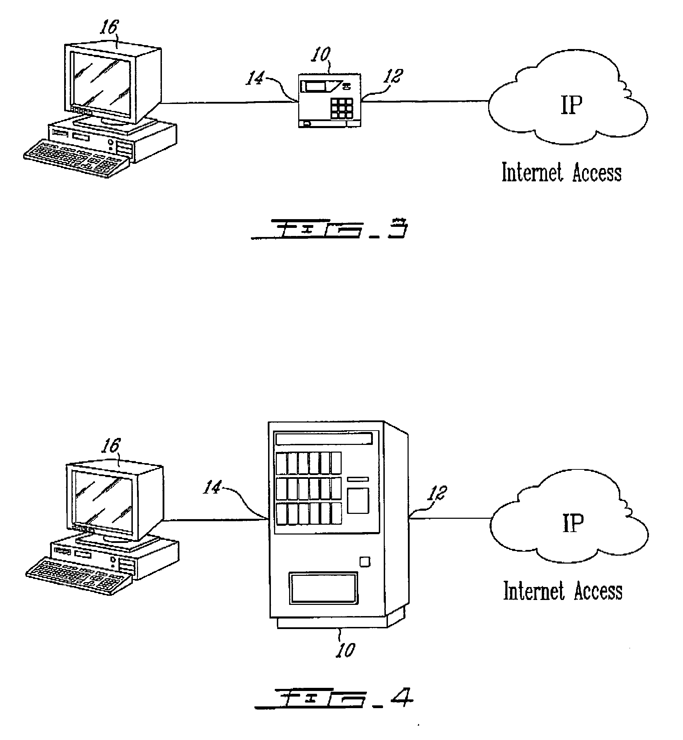

A number of further applications may be contemplated using the routing device of the present invention for local network devices that require connections to the public Internet through the use of an IPv4 address, such as for example alarm systems (see Figure 3), vending machines (see Figure 4), etc.

It is to be noted that a number of routing devices 10 may be serially connected one to each other, thereby sharing a same IP address in a daisy chain fashion. For example, a number of IP enabled vending machines in a remote location may be connected serially to a single DSL (digital subscriber line) modem for stock management and security control.

A further embodiment of the present invention may allow sharing one IP address among several devices connected in parallel, by providing separate physical interfaces (one for each device), wherein each interface defines a LAN of its own, and each connection is registered by the routing device. A physically detached local subnet may then be created to allow the devices on the multiple LANs to communicate with each other.

People in the art will appreciate that the present invention also relates to a routing method for sharing a public IP address such as a public IPv4 address, which comprises providing a routing device hosting an application and provided with an interface to a large network such as a WAN and an interface to a local network such as a LAN, providing a network device in the local network, connecting the network device to the LAN interface of the routing device, whereby the routing device shares a public IP, such as a public IPv4 address between the application it is hosting and the network device.

## Claims

1. A method for sharing a public Internet Protocol, IP, address between an application hosted by at least one routing device (10), and a device (16) of a local area network, the at least one routing device (10) comprising a first IP interface (12) to a wide area network and a second IP interface (14) to the local area network; the first IP interface (12) being assigned a public IP address, **characterized in that** the method comprises assigning the local network device (16) the public IP address of the first interface (12) of the at least one routing device (10);
whereby the at least one routing device (10) forwards each IP packet received from the wide area network, destined for the public IP address, by performing transparent IP routing, to the local network device (16) on the local area network, except if it belongs to one of: I) an existing connection used by the hosted application, and ii) a server port of the hosted application currently opened; and reversely, the at least one routing device (10) forwards each IP packet received from the local area network, by performing transparent IP routing, to the wide area network, except for IP packets sent explicitly to a private address of the at least one routing device (10).

2. The method according to claim 1, wherein the local area network device (16) is a router.

3. A routing apparatus (10) for sharing a public Internet Protocol, IP, address between an application hosted by at least one routing device (10), and a device (16) of a local area network, comprising a first IP interface (12) to the wide area network and a second IP interface (14) to the local area network, the first IP interface (12) being assigned a public IP address; **characterized in that**
- said public IP address is assigned to the at least one local area network device (16), said routing apparatus (10) having means for forwarding IP packets between the wide area network and the local area network by performing transparent IP routing; and
- the routing apparatus (10) has means for sending each IP packet received from the wide area network and destined for the public IP address, by performing transparent IP routing to the at least one local area network device (16), except if an IP packet belongs to one of: i) an existing connection used by an application hosted by the routing apparatus (10) and ii) a server port of the hosted application currently opened; and has means for sending by performing transparent IP routing, each IP packet received from the local area network to the wide area network, except for IP packets sent explicitly to a private address of the routing apparatus (10).

4. The routing apparatus according to claim 3, **characterized in that** the second IP interface (14) is assigned a private IP address and in that_the routing apparatus (10) has means for communicating with the at least one local area network (16) device through the private IP address of the second IP interface (14).

5. The routing apparatus according to claim 3, further comprising a firewall residing on said routing apparatus (10).

6. The routing apparatus according to claim 3, wherein said routing apparatus (10) hosts an embedded telephony application connected directly to the wide area network and the at least one local area network device (16) is a personal computer transparently connected to the Internet.

7. The routing apparatus according to claim 3, embedding one of VoIP and telephony services over internet.

8. The routing apparatus according to claim 3, forming part of a plurality of said routing apparatus (10) serially connected together.

9. The routing apparatus according to claim 8, comprising IP enabled vending machines.

10. The routing apparatus according to claim 3, wherein the at least one local area network device (16) is a router.

## Patentansprüche

1. Verfahren zum gemeinsamen Nutzen einer öffentlichen Internet-Protokoll-Adresse, IP, durch eine von mindestens einer Routervorrichtung (10) gehostete Anwendung und eine Vorrichtung (16) eines Lokalnetzes, wobei die mindestens eine Routervorrichtung (10) ein erstes IP-Interface (12) zu einem Fernnetz und ein zweites IP-Interface (14) zu dem Lokalnetz aufweist, wobei dem ersten IP-Interface (12) eine öffentliche IP-Adresse zugewiesen ist, **dadurch gekennzeichnet, dass** das Verfahren das Zuweisen der öffentlichen IP-Adresse des ersten Interface (12) der mindestens einen Routervorrichtung (10) an die LokalnetzVorrichtung (16) umfasst;
wobei die mindestens eine Routervorrichtung (10) jedes aus dem Fernnetz empfangene IP-Paket, das für die öffentliche IP-Adresse bestimmt ist, durch das Durchführen von transparentem IP-Routing an die Lokalnetzvorrichtung (16) auf dem Lokalnetz überträgt, außer wenn es zu einem der folgenden Elemente gehört: i) eine von der gehosteten Anwendung verwendeten bestehenden Verbindung, und ii) ein Serverport der gegenwärtig geöffneten gehosteten Anwendung; und wobei, umgekehrt, die mindestens eine Routervorrichtung (10) jedes aus dem Lokalnetz empfangene IP-Paket durch transparentes IP-Routing an das Fernnetz sendet, außer wenn es sich um explizit an eine private Adresse der mindestens einen Routervorrichtung (10) gesendete IP-Pakete handelt.

2. Verfahren nach Anspruch 1, bei dem die Lokalnetzvorrichtung (16) ein Router ist.

3. Routervorrichtung (10) zum gemeinsamen Nutzen einer öffentlichen Internet-Protokoll-Adresse, IP, durch eine von mindestens einer Routervorrichtung (10) gehostete Anwendung und eine Vorrichtung (16) eines Lokalnetzes, wobei die mindestens eine Routervorrichtung (10) ein erstes IP-Interface (12) zu einem Fernnetz und ein zweites IP-Interface (14) zu dem Lokalnetz aufweist, wobei dem ersten IP-Interface (12) eine öffentliche IP-Adresse zugewiesen ist, **dadurch gekennzeichnet, dass**
- die öffentliche IP-Adresse der mindestens einen Lokalnetzwerkvorrichtung (16) zugewiesen ist, wobei die Routervorrichtung (10) Einrichtungen zum Senden von IP-Paketen zwischen dem Fernnetz und dem Lokalnetz durch transparentes IP-Routing umfassen; und
- die Routervorrichtung (10) Einrichtungen aufweist, um jedes aus dem Fernnetz empfangene und für die öffentliche IP-Adresse bestimmte IP-Paket durch transparentes IP-Routing zu senden, außer wenn es zu einem der folgenden Elemente gehört: i) eine von der gehosteten Anmeldung verwendeten bestehenden Verbindung, und ii) ein Serverport der gegenwärtig geöffneten gehosteten Anwendung; und Einrichtungen aufweist, um jedes aus dem Lokalnetz empfangene IP-Paket durch transparentes IP-Routing an das Fernnetz zu senden, außer wenn es sich um explizit an eine private Adresse der mindestens einen Routervorrichtung (10) gesendete IP-Pakete handelt.

4. Routervorrichtung nach Anspruch 3, **dadurch gekennzeichnet, dass** dem zweiten IP-Interface (14) eine private IP-Adresse zugewiesen ist, und dass die Routervorrichtung (10) Einrichtungen zum Kommunizieren mit der mindestens einen Lokalnetzvorrichtung (16) über die private IP-Adresse des zweiten IP-Interface (14) aufweist.

5. Routervorrichtung nach Anspruch 3, ferner mit einer in der Routervorrichtung (10) befindlichen Firewall.

6. Routervorrichtung nach Anspruch 3, bei welcher die Routervorrichtung (10) eine eingebettete Telefonie-Anwendung hostet, die direkt mit dem Fernnetz verbunden ist und die mindestens eine Lokalnetzvorrichtung (16) ein transparent mit dem Internet verbundener PC ist.

7. Routervorrichtung nach Anspruch 3, in der entweder VoIP- oder Telefonie-Dienste über das Internet eingebettet sind.

8. Routervorrichtung nach Anspruch 3, welche einen Teil mehrerer in Reihe miteinander verbundener Routervorrichtungen (10) bildet.

9. Routervorrichtung nach Anspruch 8, die IP-freigegebene Verkaufsmaschinen umfasst.

10. Routervorrichtung nach Anspruch 3, bei der die mindestens eine Lokalnetzvorrichtung (16) ein Router ist.

## Revendications

1. Procédé de partage d'une adresse IP, Protocole Internet, publique entre une application hébergée par au moins un dispositif d'acheminement (10), et un dispositif (16) d'un réseau local, le au moins un dispositif d'acheminement (10) comprenant une première interface IP (12) associée à un réseau étendu et une deuxième interface IP (14) associée au réseau local ; la première interface IP (12) étant attribuée à une adresse IP publique, **caractérisé en ce que** le procédé comprend l'attribution du dispositif de réseau local (16) à l'adresse IP publique de la première interface (12) du au moins un dispositif d'acheminement (10) ;
si bien que le au moins un dispositif d'acheminement (10) transmet chaque paquet IP reçu en provenance du réseau étendu, destiné à l'adresse IP publique, en réalisant un acheminement IP transparent, vers le dispositif de réseau local (16) du réseau local, sauf si celui-ci fait partie de l'un parmi : i) une connexion existante utilisée par l'application hébergée, et ii) un port serveur de l'application hébergée actuellement ouvert ; et à l'inverse, le au moins un dispositif d'acheminement (10) transmet chaque paquet IP reçu en provenance du réseau local, en réalisant un acheminement IP transparent, vers le réseau étendu, sauf les paquets IP adressés explicitement à une adresse privée du au moins un dispositif d'acheminement (10).

2. Procédé selon la revendication 1, dans lequel le dispositif de réseau local (16) est un routeur.

3. Appareil d'acheminement (10) pour le partage d'une adresse IP, Protocole Internet, publique entre une application hébergée par au moins un dispositif d'acheminement (10), et un dispositif (16) d'un réseau local, comprenant une première interface IP (12) associée au réseau étendu et une deuxième interface IP (14) associée au réseau local, la première interface IP (12) étant attribuée à une adresse IP publique ; **caractérisé en ce que**
- ladite adresse IP publique est attribuée au au moins un dispositif de réseau local (16), ledit appareil d'acheminement (10) comprenant des moyens permettant de transférer des paquets IP entre le réseau étendu et le réseau local en réalisant un acheminement IP transparent ; et
- l'appareil d'acheminement (10) comprend des moyens permettant d'envoyer chaque paquet IP reçu en provenance du réseau étendu et destiné à une adresse IP publique, en réalisant un acheminement IP transparent, vers le au moins un dispositif de réseau local (16), sauf si un paquet IP fait partie d'un élément parmi :i) une connexion existante utilisée par une application hébergée par l'appareil d'acheminement (10) et ii) un port serveur de l'application hébergée actuellement ouvert ; et il comprend des moyens d'envoi par acheminement IP transparent de chaque paquet IP reçu en provenance du réseau local vers le réseau étendu, sauf les paquets IP envoyés explicitement à une adresse privée de l'appareil d'acheminement (10).

4. Appareil d'acheminement selon la revendication 3, **caractérisé en ce que** la deuxième interface IP (14) est attribuée à une adresse IP privée et **en ce que** l'appareil d'acheminement (10) comprend des moyens permettant de communiquer avec le au moins un dispositif de réseau local (16) par l'intermédiaire de l'adresse IP privée de la deuxième interface IP (14).

5. Appareil d'acheminement selon la revendication 3, comprenant en outre un pare-feu résidant sur ledit appareil d'acheminement (10).

6. Appareil d'acheminement selon la revendication 3, dans lequel ledit appareil d'acheminement (10) héberge une application téléphonique intégrée connectée directement au réseau étendu et le au moins un dispositif de réseau local (16) est un ordinateur individuel connecté de manière transparente à l'Internet.

7. Appareil d'acheminement selon la revendication 3, incluant un élément parmi la voix sur IP et les services téléphoniques par Internet.

8. Appareil d'acheminement selon la revendication 3, faisant partie d'une pluralité desdits appareils d'acheminement (10) connectés en série.

9. Appareil d'acheminement selon la revendication 8, comprenant des distributeurs automatiques pouvant utiliser une adresse IP.

10. Appareil d'acheminement selon la revendication 3, dans lequel le au moins un dispositif de réseau local (16) est un routeur.
